# EUROPEAN PATENT APPLICATION

(11) **EP 2 575 226 A2**
(43) Date of publication of application: **03.04.2013**
(21) Application number: 11192053.4
(22) Date of filing: 06.12.2011
(51) Int. Cl.: H02H 3/20

(54) **Overvoltage protection circuit.**

(30) Priority: 27.09.2011 TW 100134825
(71) Applicant: Askey Technology (Jiangsu) Ltd., Economic-Technological Development Area Wujiang Jiangsu (CN); Askey Computer Corp., New Taipei City 235 (TW)
(72) Inventor: Lu, Chung-Ming, 235 New Taipei City (TW); Hsieh, Ching-Feng, 108 Taipei City (TW)
(74) Representative: Ciceri, Fabio

(57) **Abstract**

An overvoltage protection circuit protects a portable electronic device against overvoltage. The overvoltage protection circuit includes an input unit for receiving an input voltage supplied by a voltage source; a voltage-divider module for dividing the input voltage and outputting a divided voltage; a voltage-regulator module for comparing a comparison voltage with the divided voltage and generating a first control signal; a first switch unit being controllably switched by the first control signal to a short-circuit state or an open-circuit state and generating a second control signal; and a second switch unit being controllably switched by the second control signal to a circuit state reverse to that of the first switch unit, and stopping supplying the input voltage to the portable electronic device when the input voltage is no less than a rated voltage of the portable electronic device. Therefore, a temperature-independent overvoltage protection can be achieved.

## Description

### FIELD OF THE INVENTION

The present invention relates to overvoltage protection circuits, and more particularly to a temperature-independent overvoltage protection circuit for effectively protecting a portable electronic device against overvoltage.

### BACKGROUND OF THE INVENTION

According to the prior art, a conventional portable electronic device is connected to an external power supply via an adapter, so that an input voltage from the external power supply is supplied to the portable electronic device via the adapter to, for example, charge or power the portable electronic device.

Following the constantly increased types of portable electronic devices being carried about by a user, the number of different adapters for the portable electronic devices is also increased. These adapters are different in their electrical properties, such as having different rated input/output voltages and currents. In the event of connecting the portable electronic device to an adapter of wrong specification, direct damage to the portable electronic device will occur. For instance, when the maximum rated voltage for the batteries, electronic elements and electronic circuits in the portable electronic device is 12V, the direct supply of a voltage higher than 12V to the portable electronic device would dangerously cause damage to the batteries, electronic elements and electronic circuits in the portable electronic device, making the latter inoperative.

Moreover, as disclosed in the prior art, diodes, transistors or comparator units are used to form a conventional overvoltage protection circuit. However, these electronic components are possibly affected by ambient temperature variation to result in a change of electric properties thereof and an error in performing the overvoltage protection.

Therefore, the inventor of the present invention develops an improved overvoltage protection circuit to eliminate the drawbacks in the prior art.

### SUMMARY OF THE INVENTION

A primary object of the present invention is to provide an overvoltage protection circuit, which is arranged between a voltage source and a portable electronic device to ensure that the portable electronic device is not damaged due to the use of an input voltage higher than an acceptable rated voltage of the portable electronic device.

Another object of the present invention is to provide a temperature-independent overvoltage protection circuit, so that the overvoltage protection circuit can always stably and effectively isolate a portable electronic device from an improper input voltage without being affected by ambient temperature variation.

A further object of the present invention is to provide an overvoltage protection circuit that utilizes a voltage divider module, which can be dynamically set to a rated voltage acceptable by a portable electronic device.

To achieve the above and other objects, the overvoltage protection circuit according to the present invention is provided between a voltage source and a portable electronic device for determining whether an input voltage supplied by the voltage source is higher than an acceptable rated voltage of the portable electronic device and providing overvoltage protection for the latter. The overvoltage protection circuit includes an input unit, a voltage divider module, a voltage regulator module, a first switch unit, and a second switch unit. The input unit receives the input voltage supplied by the voltage source. The voltage divider module is connected to the input unit and divides the input voltage to output a divided voltage. The voltage regulator module is connected to the input unit and the voltage divider module and has a comparison voltage. The voltage regulator module compares the comparison voltage with the divided voltage, and generates a first control signal according to a comparison result. The first switch unit is connected to the voltage regulator module and is controlled by the first control signal to generate a corresponding second control signal. The second switch unit is connected to the input unit and the first switch unit, and is controlled by the second control signal to supply or stop supplying the input voltage to the portable electronic device. When the input voltage is no less than the divided voltage, the voltage regulator module controls the first switch unit and the latter in turn controls the second switch unit to stop supplying the input voltage to the portable electronic device.

Compared to the prior art, the overvoltage protection circuit of the present invention employs a simple voltage divider module and voltage regulator module to achieve the object of overvoltage protection. In particular, the voltage regulator module is characterized by a resistance to temperature variation and would not cause erroneous control due to ambient temperature variation. Further, the voltage divider module can be easily set to the maximum rated voltage that can be accepted by the portable electronic device. With this setting, it is ensured the portable electronic device can be protected against damage caused by receiving an input voltage higher than the rated voltage. Therefore, the present invention has the advantages of low manufacturing cost, stable function, easy circuit design and low power consumption.

### BRIEF DESCRIPTION OF THE DRAWINGS

The structure and the technical means adopted by the present invention to achieve the above and other objects can be best understood by referring to the following detailed description of the preferred embodiment and the accompanying drawings, wherein
Fig. 1 is a block diagram of an overvoltage protection circuit according to a preferred embodiment of the present invention;
Fig. 2 is a detailed circuit diagram of a voltage divider module included in the overvoltage protection circuit of Fig. 1;
Fig. 3 is a detailed circuit diagram of a voltage regulator module included in the overvoltage protection circuit of Fig. 1;
Fig. 4 is a circuit diagram showing the operation of a first switch unit included in the overvoltage protection circuit of Fig. 1; and
Fig. 5 is a circuit diagram showing the operation of a second switch unit included in the overvoltage protection circuit of Fig. 1.

### DETAILED DESCRIPTION OF THE PREFERRED EMBODIMENTS

The present invention is hereunder described with a preferred embodiment thereof and with reference to the accompanying drawings.

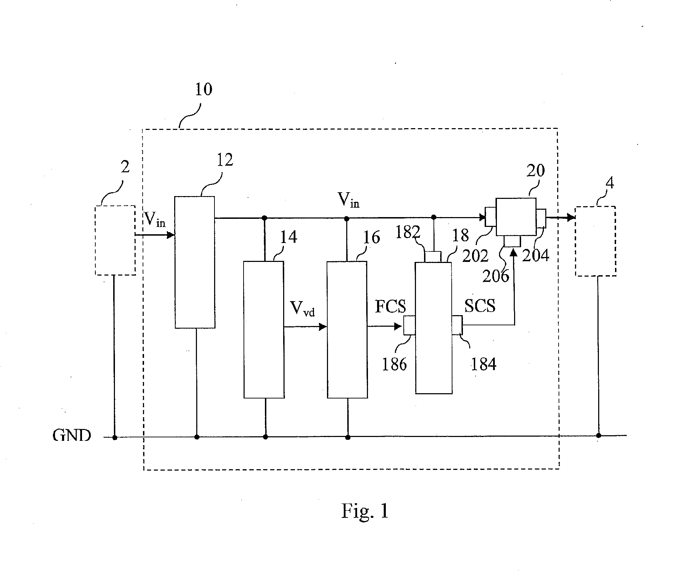

Please refer to Fig. 1 that is a block diagram of an overvoltage protection circuit according to a preferred embodiment of the present invention. As shown in Fig. 1, the overvoltage protection circuit 10 is provided between a voltage source 2 and a portable electronic device 4 for determining whether an input voltage Vᵢₙ supplied by the voltage source 2 is higher than an acceptable rated voltage of the portable electronic device 4 and providing overvoltage protection for the latter. The input voltage Vᵢₙ supplied by the voltage source 2 is a direct current (DC) voltage or an alternating current (AC) voltage. In an embodiment of the present invention, the rated voltage may be a voltage that can be withstood by all circuit units contained in the portable electronic device 4.

Further, the overvoltage protection circuit 10 is composed of an input unit 12, a voltage divider module 14, a voltage regulator module 16, a first switch unit 18, and a second switch unit 20. The input unit 12 is connected to the voltage source 2 for receiving the input voltage Vᵢₙ supplied by the voltage source 2. In an embodiment of the present invention, the input unit 12 may include a rectification circuit, so that an input AC voltage Vᵢₙ supplied by the voltage source 2 and received by the input unit 12 can be rectified by the rectification circuit to a DC voltage.

The voltage divider module 14 has two terminals, one of which is connected to the input unit 12 and the other one of which is connected to a ground GND. With these arrangements, the input voltage Vᵢₙ across the input unit 12 is divided by the voltage divider module 14 and a corresponding divided voltage V_{vd} is produced.

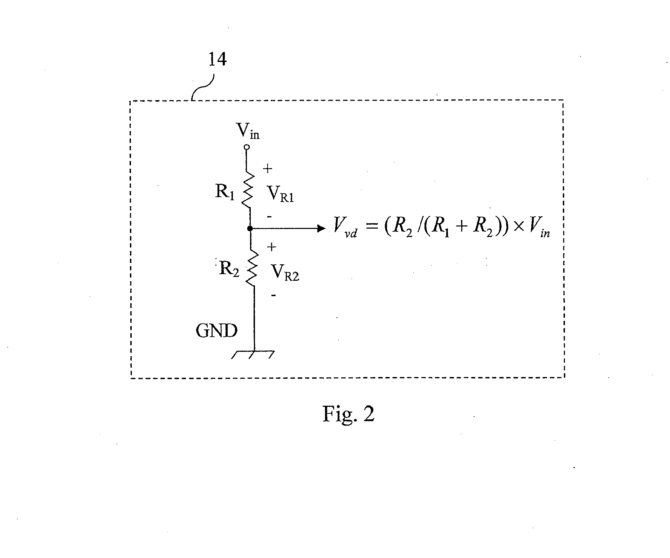

Please refer to Fig. 2 along with Fig. 1. The voltage divider module 14 may consist of a first resistor unit R1 and a second resistor unit R2 that are connected in series. The input voltage Vᵢₙ is applied across the first resistor unit R1 and the second resistor unit R2 to produce the divided voltage V_{vd}, and there are a first voltage drop V_{R1} and a second voltage drop V_{R2} across the first resistor unit R1 and the second resistor unit R2, respectively. The divided voltage V_{vd} is directly output from the second resistor unit R2. In other words, the divided voltage V_{vd} is equal to the second voltage drop V_{R2}. Therefore, the relation between the divided voltage V_{vd}, the input voltage Vᵢₙ, the resistance of the first resistor unit R1, and the resistance of the second resistor unit R2 can be expressed by the following equation:
V_{vd} = (R₂/(R₁+R₂)) X Vᵢₙ, where R₁, R₂ denote the resistance of the first resistor unit R1 and the resistance of the second resistor unit R2, respectively.

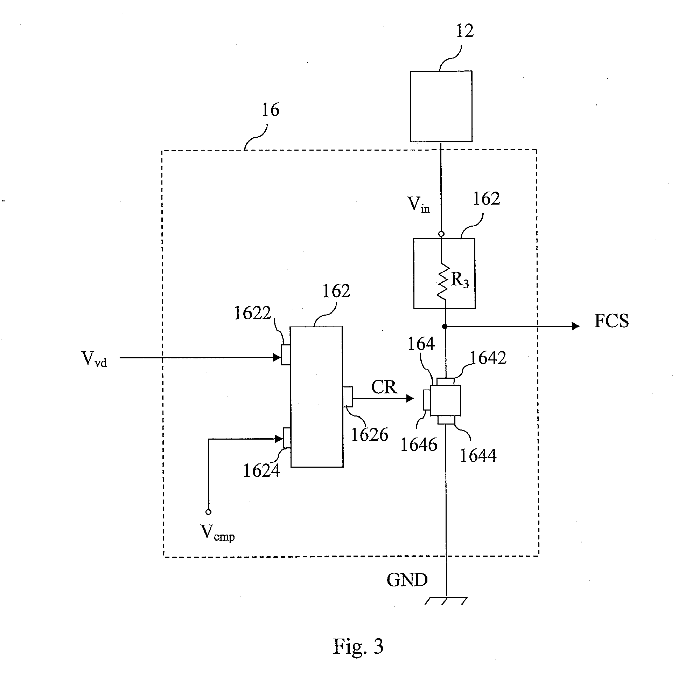

The voltage regulator module 16 is connected to the input unit 12 and the voltage divider module 14, and has a comparison voltage V_{cmp} (shown in Fig. 3). The voltage regulator module 16 generates a first control signal FCS according to a comparison result obtained in a comparison of the comparison voltage V_{cmp} with the divided voltage V_{vd} received by the voltage regulator module 16.

In an embodiment of the present invention, when the divided voltage V_{vd} is lower than the comparison voltage V_{cmp}, the voltage regulator module 16 generates the first control signal FCS for controllably switching the first switch unit 18 to an open-circuit state. On the other hand, when the divided voltage V_{vd} is higher than or equal to the comparison voltage V_{cmp}, the voltage regulator module 16 generates the first control signal FCS for controllably switching the first switch unit 18 to a short-circuit state.

Fig. 3 is a detailed circuit diagram of the voltage regulator module 16. Please refer to Fig. 3 along with Fig. 1. In an embodiment of the present invention, as shown in Fig. 3, the voltage regulator module 16 further includes a third resistor unit R3, a comparator unit 162, and a third switch unit 164. The third resistor unit R3 has two terminals, one of which is connected to the input unit 12 and the other one of which is connected to the third switch unit 164. That is, the third resistor unit R3 and the third switch unit 164 are connected in series. The comparator unit 162 has a divided-voltage terminal 1622, a comparison-voltage terminal 1624, and a comparison output terminal 1626. The divided-voltage terminal 1622 receives the divided voltage V_{vd}. The comparison-voltage terminal 1624 receives the comparison voltage V_{cmp}. The comparison output terminal 1626 compares the divided voltage V_{vd} with the comparison voltage V_{cmp} and outputs a comparison result CR. The third switch unit 164 includes a third input terminal 1642, a third output terminal 1644, and a third control terminal 1646. The third control terminal 1646 is connected to the comparison output terminal 1626. The third input terminal 1642 is connected to the third resistor unit R3. The third output terminal 1644 is connected to the ground GND. Further, the third switch unit 164 can be switched to a short-circuit state according to the comparison result CR. That is, the input voltage Vᵢₙ can be connected to the ground GND via the third resistor unit R3, the third input terminal 1642, and the third output terminal 1644. Since the ground GND has a potential of zero, a first control signal FCS is generated at the third input terminal 1642 for controllably switching the first switch unit 18 to a short-circuit state. Alternatively, when the third switch unit 164 is switched to an open-circuit state according to the comparison result CR, the input voltage Vᵢₙ cannot be supplied to the third switch unit 164 but is directly output to the first switch unit 18, and a first control signal FCS is generated at the third input terminal 1642 for controllably switching the first switch unit 18 to an open-circuit state.

Please refer back to Fig. 1. The first switch unit 18 is connected to the input unit 12 and the voltage regulator module 16, and is controlled by the first control signal FCS to generate a corresponding second control signal SCS. The first switch unit 18 includes a first input terminal 182, a first output terminal 184, and a first control terminal 186. The first control terminal 186 is connected to the third resistor R3 and the third switch unit 164. The first input terminal 182 is connected to the input unit 12. The first output terminal 184 is connected to the second switch unit 20. In addition, the first switch unit 18 selectively generates the second control signal SCS at the first output terminal 184 for controllably switching the second switch 20 to an open-circuit state or a short-circuit state, depending on the first control signal FCS.

The second switch unit 20 is connected to the input unit 12 and the first switch unit 18, and controls the output of the input voltage Vᵢₙ to the portable electronic device 4 according to the second control signal SCS. The second switch unit 20 includes a second input terminal 202, a second output terminal 204, and a second control terminal 206. The second control terminal 206 is connected to the first switch unit 18. The second input terminal 202 receives the input voltage Vᵢₙ. The second output terminal 204 is connected to the portable electronic device 4.

In other words, the first switch unit 18 and the second switch unit 20 are controllably switched by the first control signal FCS and the second control signal SCS to two reverse circuit states, namely, an open-circuit state and a short-circuit state, respectively.

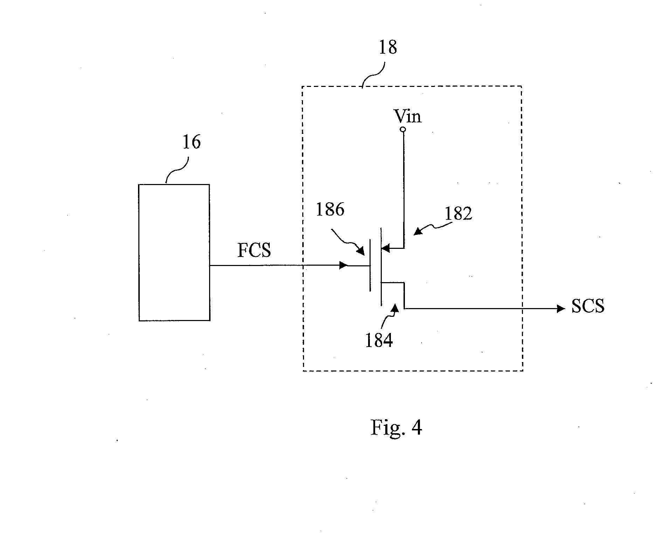

Fig. 4 is a detailed circuit diagram of the first switch unit 18. Please refer to Fig. 4 along with Fig. 1. In Fig. 4, the first switch unit 18 is illustrated as a p-type metal-oxide-semiconductor field-effect transistor (MOSFET) with the first input terminal 182 corresponding to the source, the first output terminal 184 corresponding to the drain, and the first control terminal 186 corresponding to the gate. According to the property of the p-type MOSFET, when the voltage applied across the gate is lower than the voltage across the source (or the drain), a short-circuit state (also referred to as a turn-on state) is formed between the source and the drain. On the other hand, when the voltage applied across the gate is higher than the voltage across the source (or the drain), an open-circuit state (also referred to as a cut-off state) is formed between the source and the drain.

The first switch unit 18 includes a first gate, a first source and a first drain. The first gate is connected to the voltage regulator module 16, the first source is connected to the input unit 12, and the first drain is connected to the second switch unit 20.

When the first control signal FCS is a zero voltage, since the voltage across the first source is higher than the voltage across the first gate, a short-circuit state is formed between the first source and the first drain of the first switch unit 18, allowing the input voltage Vᵢₙ to be input to the first source and output from the first drain. Therefore, a second control signal SCS having the input voltage Vᵢₙ is generated for controllably switching the second switch unit 20 to an open-circuit state. And, when the first control signal FCS is the input voltage Vᵢₙ, since the voltage across the first source is equal to the voltage across the first gate, an open-circuit state is formed between the first source and the first drain of the first switch unit 18, and the input voltage Vᵢₙ could not be output via the first drain, and the second control signal SCS has a zero-volt voltage at this time.

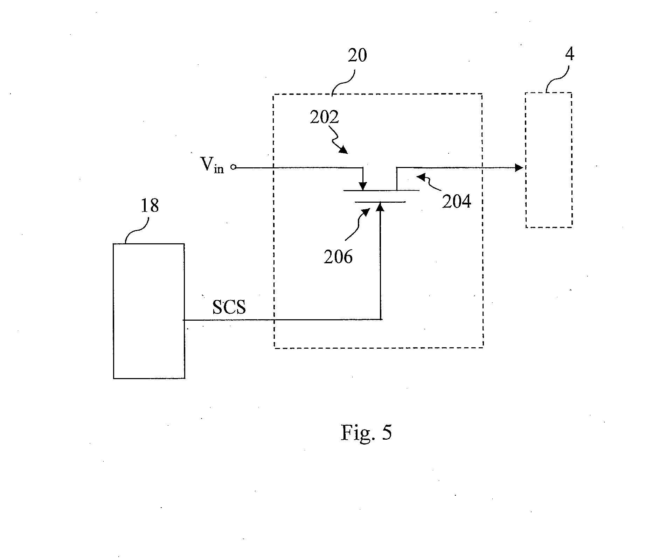

Fig. 5 is a detailed circuit diagram of the second switch unit 20. Please refer to Fig. 5 along with Fig. 1. In Fig. 5, the second switch unit 20 is illustrated as a p-type MOSFET with the second input terminal 202 corresponding to the source, the second output terminal corresponding to the drain, and the second control terminal 206 corresponding to the gate.

The second switch unit 20 includes a second gate, a second source and a second drain. The second gate is connected to the first drain of the first switch unit 18 for receiving the second control signal SCS. The second source is connected to the input unit 12. The second drain is connected to the portable electronic device 4.

When the second control signal SCS is the input voltage Vᵢₙ, the voltage across the second source of the second switch unit 20 is equal to the voltage across the second gate, bringing an open-circuit state to form between the second source and the second drain of the second switch unit 20, and the input voltage Vᵢₙ could not be supplied to the portable electronic device 4 via the second switch unit 20. And, when the second control signal SCS is a zero volt voltage, since the voltage across the second source is higher than the voltage across the second gate, a short-circuit state is formed between the second source and the second drain of the second switch unit 20, allowing the input voltage Vᵢₙ to be input to the second source and output from the second drain to the portable electronic device 4.

In brief, the overvoltage protection circuit of the present invention employs the simple voltage divider module and voltage regulator module to achieve the purpose of overvoltage protection. Wherein, the voltage regulator module is characterized by having a resistance to temperature variation and would not cause erroneous control due to ambient temperature variation. Further, the voltage divider module can be easily set to the maximum rated voltage acceptable by the portable electronic device. With such setting, it is ensured the portable electronic device can be protected against damage due to receiving an input voltage higher than the rated voltage. Therefore, the present invention has the advantages of low manufacturing cost, stable function, simple circuit design, and low power consumption.

The present invention has been described with a preferred embodiment thereof and it is understood that many changes and modifications in the described embodiment can be carried out without departing from the scope and the spirit of the invention that is intended to be limited only by the appended claims.

## Claims

1. An overvoltage protection circuit provided between a voltage source and a portable electronic device for determining whether an input voltage supplied by the voltage source is higher than an accepted rated voltage of the portable electronic device and providing overvoltage protection for the portable electronic device, comprising:
an input unit for receiving the input voltage supplied by the voltage source;
a voltage divider module being connected to the input unit for dividing the input voltage to output a divided voltage;
a voltage regulator module being connected to the input unit and the voltage divider module and having a comparison voltage; and the voltage regulator module comparing the comparison voltage with the divided voltage and generating a first control signal based on a comparison result;
a first switch unit being connected to the input unit and the voltage regulator module, and being controlled by the first control signal to generate a corresponding second control signal; and
a second switch unit being connected to the input unit and the first switch unit, and controllably allowing the input voltage to be output to the portable electronic device based on the second control signal;
wherein, when the input voltage is no less than the divided voltage, the voltage regulator module controls the second switch unit via the first switch unit to stop outputting the input voltage via the second switch unit.

2. The overvoltage protection circuit as claimed in claim 1, wherein the first switch unit and the second switch unit are respectively switched by the first control signal and the second control signal to two reverse circuit states of an open-circuit state and a short-circuit state controllably.

3. The overvoltage protection circuit as claimed in claim 2, wherein the voltage regulator module generates the first control signal to control the first switch unit to form a short-circuit state when the comparison result indicates the divided voltage is no less than the comparison voltage; and wherein the voltage regulator module generates the first control signal to control the first switch unit to form an open-circuit state when the comparison result indicates the divided voltage is lower than the comparison voltage.

4. The overvoltage protection circuit as claimed in claim 3, wherein the first switch unit generates the second control signal for controllably switching the second switch unit to an open-circuit state when the first switch unit is in the short-circuit state, and the first switch unit generates the second control signal for controllably switching the second switch unit to a short-circuit state when the first switch unit is in the open-circuit state.

5. The overvoltage protection circuit as claimed in claim 1, wherein the voltage divider module includes a first resistor unit and a second resistor unit, the first and second resistor units being connected in series, and the input voltage is divided to output the divided voltage at the second resistor unit.

6. The overvoltage protection circuit as claimed in claim 1, wherein the voltage regulator module includes a third resistor unit, a comparator unit, and a third switch unit, the third resistor unit being provided between the input unit and the third switch unit and being connected to the third switch unit in series, and the third switch unit being controlled to generate the first control signal based on the comparison result.

7. The overvoltage protection circuit as claimed in claim 6, wherein the comparator unit controllably switches the third switch unit to an open-circuit state when the divided voltage is lower than the comparison voltage, and the comparator unit controllably switches the third switch unit to a short-circuit state when the divided voltage is higher than or equal to the comparison voltage.

8. The overvoltage protection circuit as claimed in claim 7, wherein the comparator unit includes a divided-voltage terminal, a comparison-voltage terminal, and a comparison output terminal, the divided-voltage terminal receiving the divided voltage, the comparison-voltage terminal receiving the comparison voltage, and the comparison output terminal comparing the divided voltage with the comparison voltage to output the comparison result.

9. The overvoltage protection circuit as claimed in claim 8, wherein the third switch unit includes a third input terminal, a third output terminal, and a third control terminal, the third control terminal being connected to the comparison output terminal, the third input terminal being connected to the third resistor unit, and the third output terminal being connected to a ground.

10. The overvoltage protection circuit as claimed in claim 9, wherein the first switch unit includes a first input terminal, a first output terminal, and a first control terminal, the first control terminal being connected to the third resistor unit and the third switch unit, the first input terminal being connected to the input unit, and the first output terminal being connected to the second switch unit.

11. The overvoltage protection circuit as claimed in claim 10, wherein the second switch unit includes a second input terminal, a second output terminal, and a second control terminal, the second control terminal being connected to the first output terminal, the second input terminal being connected to the input unit, and the second output terminal being connected to the portable electronic device.

12. The overvoltage protection circuit as claimed in claim 11, wherein the first switch unit, the second switch unit, and the third switch unit are respectively a metal-oxide-semiconductor field-effect transistor (MOSFET).

13. A portable electronic device with overvoltage protection circuit for receiving an input voltage supplied by a voltage source, comprising:
an internal circuit unit being provided in the portable electronic device;
an input unit for receiving the input voltage supplied by the voltage source;
a voltage divider module being connected to the input unit for dividing the input voltage and outputting a divided voltage;
a voltage regulator module being connected to the input unit and the voltage divider module and having a comparison voltage; and the voltage regulator module comparing the comparison voltage with the divided voltage and generating a first control signal based on a comparison result;
a first switch unit being connected to the input unit and the voltage regulator module, and being controlled by the first control signal to generate a corresponding second control signal; and
a second switch unit being connected to the input unit and the first switch unit, and controlling output of the input voltage to the portable electronic device based on the second control signal;
wherein, when the input voltage is no less than the divided voltage, the voltage regulator module controls the second switch unit via the first switch unit to stop outputting the input voltage via the second switch unit.
